(19) Europäisches Patentamt / European Patent Office / Office européen des brevets

(11) **EP 4 158 277 B1**

(12) **EUROPÄISCHE PATENTSCHRIFT**

(45) Veröffentlichungstag und Bekanntmachung des Hinweises auf die Patenterteilung:
**23.07.2025 Patentblatt 2025/30**

(21) Anmeldenummer: **22725987.6**

(22) Anmeldetag: **29.04.2022**

(51) Internationale Patentklassifikation (IPC):
**G01B 11/02** (2006.01)   **G01B 11/30** (2006.01)
**G01B 21/04** (2006.01)

(52) Gemeinsame Patentklassifikation (CPC):
**G01B 21/045; G01B 11/028; G01B 11/306;**
G01B 5/0009; G01B 2210/46

(86) Internationale Anmeldenummer:
**PCT/DE2022/200082**

(87) Internationale Veröffentlichungsnummer:
**WO 2022/253388 (08.12.2022 Gazette 2022/49)**

(54) **VERFAHREN UND VORRICHTUNG ZUR VERMESSUNG EINES MESSOBJEKTES**

METHOD AND DEVICE FOR MEASURING A MEASUREMENT OBJECT

PROCÉDÉ ET DISPOSITIF DE MESURE D'UN OBJET DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.05.2021 DE 102021205503**

(43) Veröffentlichungstag der Anmeldung:
**05.04.2023 Patentblatt 2023/14**

(73) Patentinhaber: **MICRO-EPSILON Messtechnik GmbH & Co. KG**
**94496 Ortenburg (DE)**

(72) Erfinder:
- **KIRSCHNER, Gerhard**
  **94036 Passau (DE)**
- **SCHWEIZER, Daniel**
  **94496 Ortenburg (DE)**
- **FUELLMEIER, Herbert**
  **84385 Egglham (DE)**

(74) Vertreter: **Ullrich & Naumann PartG mbB**
**Schneidmühlstrasse 21**
**69115 Heidelberg (DE)**

(56) Entgegenhaltungen:
EP-A1- 0 342 267     EP-A1- 3 410 063
DE-A1- 102012 111 008     DE-A1- 102014 200 157
DE-A1- 102014 221 849

**Beschreibung**

Die Erfindung betrifft ein Verfahren zur Vermessung eines Messobjektes, nämlich zur Breitenmessung und/oder zur Ebenheitsmessung eines Messobjektes, mit einem entlang einer Linearachse beweglichen Messsystem, wobei das Messsystem mindestens einen Sensor aufweist und wobei Mittel zur Erfassung einer Position eines Referenzpunktes des Messsystems angeordnet sind.

Des Weiteren betrifft die Erfindung eine Vorrichtung zur Vermessung eines Messobjektes, nämlich zur Breitenmessung und/oder zur Ebenheitsmessung eines Messobjektes, unter Nutzung eines Verfahrens nach einem der Ansprüche 1 bis 7, mit einem entlang einer Linearachse beweglichen Messsystem,
wobei das Messsystem mindestens einen Sensor aufweist und wobei Mittel zur Erfassung einer Position eines Referenzpunktes des Messsystems angeordnet sind.

Aus dem Stand der Technik sind berührungslosen Abstandssensoren bekannt, die auf einem Messsystem mit einer angetriebenen Linearachse montiert sind und während einer Traversierbewegung den Abstand zu einem Messobjekt und die Position des Messsystems auf der Linearachse messen. Der Messwert des Sensors (z.B. Abstand oder Kantenposition) und die Sensorposition bzw. die Position eines in einem definierten Abstand zu dem Sensor angeordneten Referenzpunktes des Messsystems, der sich somit auf der Linearachse gleichförmig mitbewegt, werden dabei synchron erfasst. Kantenpositionen und Abstände zu Messobjekten können so gemessen werden. Die Kanten der Messobjekte bzw. die Abstände zu den Messobjekten können berührungslos mit optischen Sensoren wie z.B. Triangulations-Sensoren, konfokalen Sensoren oder optischen Mikrometern erfasst werden. Je nach Sensortyp und Messaufgabe können unterschiedliche Systemanordnungen zum Einsatz kommen. Bei einseitiger Messung genügt eine Achse oberhalb bzw. unterhalb des Messobjekts. Ist beim Sensor Sender und Empfänger gegenüberliegend angeordnet, so kommt entweder ein C-Rahmen mit einer Achse oder eine O-Rahmen-Konstruktion mit zwei Achsen zum Einsatz. Beim O-Rahmen-Konzept ist darauf zu achten, dass Sender und Empfänger des Sensors (jeweils auf gegenüberliegenden Achsen verbaut) synchron verfahren werden. Beim C-Rahmen-Konzept wird üblicherweise der ganze C-Rahmen auf einer Linearachse verfahren.

EP 0342267 A1 offenbart ein Verfahren zur Ermittlung der Koordinatenwerte eines Tastelements, bei dem eine Schieflage eines Trägers für das Tastelement durch elektronische Neigungsmesser im Träger gemessen und in Form von Korrekturwerten berücksichtigt wird.

Bei den bekannten Systemen ist problematisch, dass unterschiedliche Fehlerquellen existieren, die zur Folge haben, dass die ermittelten Messwerte fehlerbehaftet sind.

Der vorliegenden Erfindung liegt daher die Aufgabe zugrunde, ein Verfahren und eine Vorrichtung zur Vermessung eines Messobjektes der eingangs genannten Art derart auszugestalten und weiterzubilden, dass auf einfache Weise eine präzise Vermessung möglich ist.

Erfindungsgemäß wird die voranstehende Aufgabe in Bezug auf das Verfahren durch die Merkmale des Anspruches 1 gelöst. Damit ist ein Verfahren zur Vermessung eines Messobjektes angegeben, nämlich zur Breitenmessung und/oder zur Ebenheitsmessung eines Messobjektes, mit einem entlang einer Linearachse beweglichen Messsystem, wobei das Messsystem mindestens einen Sensor aufweist und wobei Mittel zur Erfassung einer Position eines Referenzpunktes des Messsystems angeordnet sind, wobei mit dem Sensor mindestens ein Messwert des Messobjektes erfasst wird und wobei ein durch eine Neigung der Linearachse um einen Neigungswinkel $\beta$ hervorgerufener Messfehler des Messwerts ermittelt wird und wobei der Messwert um den Messfehler korrigiert wird, wobei über einen Neigungssensor des Messsystems der lokale Neigungswinkel $\beta$ der Linearachse ermittelt wird.

In Bezug auf die Vorrichtung wird die voranstehende Aufgabe durch die Merkmale des Anspruchs 8 gelöst.

In erfindungsgemäßer Weise ist zunächst erkannt worden, dass durch eine Neigung (Drehung) des Messsystems auf bzw. mit einer Linearachse aus seiner horizontalen Lage die Position eines integrierten Sensors verfälscht. Diese ungewollte Positionsänderung der Sensorik - und damit ungewollte Verschiebung des Messflecks auf dem Messobjekt - auf verschiedenen Positionen der Linearachse führt zu Messfehlern z.B. bei einer Breitenmessung (Auswertung der Sensorwerte in Richtung der Linearachse) bzw. bei einer Ebenheitsmessung mit einseitiger Abstandmessung (Auswertung der Sensorwerte in vertikaler Richtung zur Linearachse).

In weiter erfindungsgemäßer Weise ist erkannt worden, dass ein durch eine Neigung der Linearachse hervorgerufene Messfehler kompensiert werden kann, wenn der Neigungswinkel und die Position eines Referenzpunktes des Messsystems zum Messobjekt bekannt sind. Die daraus resultierende Positionsänderung des Messflecks auf dem Messobjekt kann durch eine Korrektureinheit, beispielsweise ein Computer mit einer entsprechenden Software, kompensiert werden. Für eine Breitenmessung des Messobjektes ist es ausreichend, nur die horizontale Positionsänderung in Traversierrichtung zu betrachten. Die Neigung kann dabei prinzipiell eine absolute Neigung der gesamten Linearachse bedeuten, oder erfindungsgemäß eine lokale Neigung, hervorgerufen z.B. durch eine Durchbiegung oder Krümmung der Linearachse. Zur Vereinfachung der weiteren Beschreibung der Erfindung ist im Folgenden immer die absolute Neigung der Linearachse dargestellt.

Im Konkreten ist es denkbar, dass das Messsystem auf mindestens einer angetriebenen Linearachse montiert ist. Alternativ oder zusätzlich kann das Messsystem einen Rahmen aufweisen, an dem der mindestens eine Sensor angeordnet ist. Bei dem Rahmen kann es sich um einen C-Rahmen mit einer Achse, einen O-Rahmen mit zwei Achsen oder einen beliebigen anderen Rahmen handeln, nämlich entsprechend der zu erfüllenden Messaufgabe. Bei einem O-Rahmen könnten der Sender und der Empfänger des Sensors jeweils auf gegenüberliegenden Linearachsen verbaut sein und synchron verfahren werden.

Bei einem C-Rahmen könnte der gesamte C-Rahmen auf einer einzelnen Linearachse verfahren werden.

Des Weiteren kann es sich bei den Mitteln zur Erfassung einer Position eines Referenzpunktes um einen Positionsgeber der Linearachse handeln. Beispielsweise kann die Position des Referenzpunktes absolut über ein inkrementelles Magnetband bestimmt werden. Beliebige andere Sensoriken können hierbei Anwendung finden.

Für das erfindungsgemäße Verfahren und die erfindungsgemäße Vorrichtung sind auch andere Messaufgaben denkbar, wie z.B. eine Ebenheitsmessung, vorzugsweise mit einem C-Rahmen. Auch hier beeinflusst die Neigung der Linearachse den Messwert des Sensors - diesmal ist aber die Positionsänderung in der Höhe (vertikaler Messert) von Bedeutung. Diese Höhenänderung kann bei bekannten C-Rahmen-Abmaßen und Neigungswinkel(n) der Linearachse ebenfalls korrigiert werden, beispielsweise durch eine Korrektureinheit mit einer entsprechenden Software. Auch ist es denkbar, dass vertikale Messfehler und horizontale Messfehler gleichzeitig korrigiert werden.

Die Messunsicherheit, verursacht durch die Neigung der Linearachse, ist im Wesentlichen von folgenden Faktoren abhängig:

- von der Ebenheit (=Neigung) der Linearachse
- von dem Höhenunterschied der Linearachse zum Messobjekt
- vom horizontalem Abstand der Messposition zum Schlitten der Linearachse

Der Begriff "Neigungswinkel" beschreibt dabei eine Neigung der Linearachse - die somit zu einer Neigung des Messsystems führt - in Erstreckungsrichtung oder entgegen der Erstreckungsrichtung der Linearachse.

In vorteilhafter Weise wird ein horizontaler Messwert des Messobjektes erfasst, der eine Position in Erstreckungsrichtung der Linearachse angibt. Alternativ oder zusätzlich kann ein vertikaler Messwert des Messobjektes erfasst werden, der eine Position in Richtung senkrecht zur Erstreckungsrichtung der Linearachse angibt. Die Begriffe "horizontal" und "vertikal" beschreiben in dieser Offenbarung somit keine absolute Ausrichtung relativ zur Richtung der Gravitationskraft, sondern eine Ausrichtung relativ zur Erstreckungsrichtung bzw. Bewegungsrichtung der Linearachse. Die Erfassung horizontaler Messwerte kann somit zur Bestimmung der Breite eines Messobjektes dienen, wohingegen die Erfassung vertikaler Messwerte zur Bestimmung der Ebenheit eines Messobjektes genutzt werden kann.

Bei dem mindestens einen Sensor kann es sich in vorteilhafter Weise um einen berührungslosen Sensor handeln, insbesondere um einen optischen Sensor, vorzugsweise einen Triangulations-Sensor, einen konfokalen Sensor oder ein optisches Mikrometer. Das optische Mikrometer kann beispielsweise berührungslos nach dem Prinzip der Abschattung bzw. Lichtmengenmessung die Dimension und Position des Messobjektes bestimmen.

Gemäß einer vorteilhaften Ausgestaltung kann ein horizontaler Messfehler $p_h$ des horizontalen Messwerts anhand der folgenden Formel ermittelt werden:

$$p_h = r \cdot \sin(\beta)$$

wobei r der vertikale Abstand zwischen der Linearachse und dem Messobjekt ist. Eine entsprechende Korrektur ist auf besonders einfache Weise zu realisieren.

In besonders vorteilhafter Weise kann ein horizontaler Messfehler $p_{h,ges}$ des horizontalen Messwerts anhand der folgenden Formeln ermittelt werden:

$$p_1 = r \cdot \sin(\beta)$$

$$p_2 = a - a \cdot \cos(\beta)$$

$$p_{h,ges} = p_1 - p_2$$

wobei r der vertikale Abstand zwischen der Linearachse und dem Messobjekt ist und wobei a der horizontale Abstand zwischen einer Kante des Messobjektes und dem Referenzpunkt ist. Dadurch kann eine besonders exakte Bestimmung des Messfehlers und somit der Korrektur des Messwertes erfolgen, so dass eine präzise Vermessung des Messobjektes ermöglicht wird.

Gemäß einer weiteren vorteilhaften Ausgestaltung kann ein vertikaler Messfehler $p_v$ des vertikalen Messwerts anhand der folgenden Formel ermittelt werden:

$$p_v = r - r \cdot \cos(\beta)$$

wobei r der vertikale Abstand zwischen der Linearachse und dem Messobjekt ist. Eine entsprechende Korrektur ist auf besonders einfache Weise zu realisieren.

In besonders vorteilhafter Weise kann ein vertikaler Messfehler $p_{v,ges}$ des vertikalen Messwerts anhand der folgenden Formel ermittelt werden:

$$p_3 = r - r \cdot \cos(\beta)$$

$$p_4 = a \cdot \sin(\beta)$$

$$p_{v,ges} = p_3 + p_4$$

wobei r der vertikale Abstand zwischen der Linearachse und dem Messobjekt ist und wobei a der horizontale Abstand zwischen einer Kante des Messobjektes und dem Referenzpunkt ist. Die Berechnung des vertikalen Messfehlers anhand der voranstehenden Formeln ist äußerst exakt, wodurch sich die Präzision der Vermessung des Messobjektes erheblich verbessert.

In weiter vorteilhafter Weise kann an definierten Messpunkten der Neigungswinkel der Linearachse ermittelt werden. Im allgemeine Fall kann eine einmalige (bzw. gelegentliche) Bestimmung des Neigungswinkels genügen. Jedoch ist denkbar, dass sich aufgrund verschiedener Faktoren (Anschraubpunkte der Achse, Veränderung des Unterbaus der Achse z.B. durch Temperatureinflüsse, ...) der Neigungsverlauf der Linearachse im Laufe der Zeit verändert. Daher kann es von Vorteil sein, den Neigungswinkel der Linearachse wiederholt zu bestimmen. Dazu wird erfindungsgemäß ein Neigungssensor, der an dem Messsystem angeordnet ist, verwendet. Beliebig ausgebildete Neigungssensoren sind denkbar, sofern diese die nötige Auflösung und Genauigkeit für die Messung gewährleisten.

Für die Erfassung des Neigungswinkels von Linearachsen gibt es mehrere Optionen:

- Sollte ein Neigungssensor während der Bewegung der Linearachse die Neigungsänderung erfassen können, so kann der Neigungswert der Linearachse synchron zu den Positionswerten des Referenzpunktes und den Messwerten des Sensors erfasst werden. Die Korrektur der Messwerte kann in vorteilhafter Weise sodann nach den obigen Formeln erfolgen. Sofern ungleichförmige Bewegungen des Messsystems auf der Linearachse (z.B. Vibrationen, Beschleunigungen etc.) die Messgenauigkeit des Neigungssensors beeinflussen, könnte von einer Erfassung des Neigungswinkels während der Bewegung der Linearachse abgesehen werden.
- Sollte der Neigungssensor nur im Stillstand die Neigungsänderung korrekt erfassen können, so könnten, vorzugsweise in einem festen Raster (z.B. alle 15 cm), an definierten Messstellen der Neigungswinkel der Linearachse im Stillstand erfasst werden. Anhand der Messstellen könnte eine geeignete Funktion ermittelt werden, die die Änderung des Neigungswinkels in Abhängigkeit zur Position des Referenzpunktes des Messsystems auf der Linearachse darstellt. Diese Funktion kann dann während der Messfahrt zur Ermittlung des Neigungswinkels in Abhängigkeit der Position des Referenzpunktes verwendet werden. Die Ermittlung der Messpunkte kann bevorzugt in regelmäßigen zeitlichen Abständen wiederholt werden.

Es wird darauf hingewiesen, dass das erfindungsgemäße Verfahren auch eine vorrichtungsgemäße Ausprägung hat. Die erfindungsgemäße Vorrichtung kann die entsprechenden in Bezug auf das Verfahren beschriebenen Merkmale und Vorteile aufweisen. Ebenso können Merkmale und Vorteile der erfindungsgemäßen Vorrichtung mit einer verfahrensgemäßen Ausprägung Teil des erfindungsgemäßen Verfahrens sein.

Es gibt nun verschiedene Möglichkeiten, die Lehre der vorliegenden Erfindung in vorteilhafter Weise auszugestalten und weiterzubilden. Dazu ist einerseits auf die Anspruch nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen

Fig. 1       in einer schematischen Darstellung ein Ausführungsbeispiel einer erfindungsgemäßen Vorrichtung zur Durchführung des erfindungsgemäßen Verfahrens,

Fig. 2a bis 2c   in schematischen Darstellungen die Auswirkung einer Neigung der Linearachse auf den horizontalen Messwert,

Fig. 3       in einer schematischen Darstellung eine Näherung des horizontalen Messfehlers bei einer Neigung der Linearachse,

Fig. 4       in einer schematischen Darstellung den realen horizontalen Messfehler bei einer Neigung der Linearachse,

Fig. 5       in einer schematischen Darstellung eine Veranschaulichung des Neigungswinkels,

Fig. 6       die an mehreren Tagen gemessene Änderung des Neigungswinkels einer Linearachse, und

Fig. 7       in einer schematischen Darstellung den realen vertikalen Messfehler bei einer Neigung der Linearachse.

Zur Verbesserung der Übersichtlichkeit sind in den Figuren nicht immer sämtliche Elemente mit einem Bezugszeichen versehen, wobei gleiche Elemente in den Figuren mit gleichen Bezugszeichen gekennzeichnet sind.

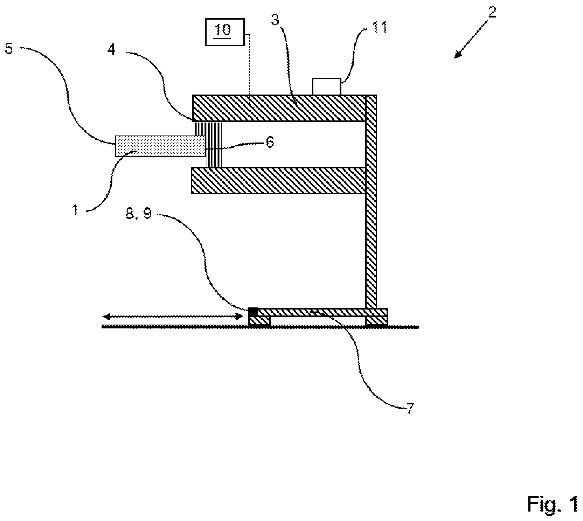

Mit Figur 1 werden die durch die Erfindung zu kompensierenden Messfehler anhand einer Breitenmessung erläutert. Für eine Ebenheitsmessung müsste in Figur 1 eine Sensorik zur Abstandsmessung skizziert werden. Anstatt der horizontalen Messrichtung müsste stattdessen die vertikale Messrichtung betrachtet werden.

Figur 1 zeigt ein Ausführungsbeispiel einer Vorrichtung zur Breitenmessung eines Messobjektes 1. Die Vorrichtung weist ein Messsystem 2 mit einem C-Rahmen 3 und einem Sensor 4 auf, der in diesem Ausführungsbeispiel als optisches Mikrometer ausgebildet ist. Der Sensor 4 detektiert die relativen Kanten 5, 6 des Messobjekts 1 zum C-Rahmen 3 in einer horizontalen Messrichtung, d.h. entlang der Erstreckungsrichtung der Linearachse 7. Um die Position des Sensors 4 zu bestimmen, ist ein Referenzpunkt 8 vorgesehen, dessen Position auf der Linearachse 7 mit geeigneten Mitteln 9 zur Erfassung der Position bestimmbar ist. In diesem Ausführungsbeispiel kann die Position des Referenzpunktes 8 mit einem inkrementellen Magnetband 9, das somit als Mittel 9 zur Erfassung der Position dient, absolut bestimmt werden. Andere Ausgestaltungen der Mittel 9 sind denkbar, beispielsweise ein Sensor, insbesondere ein optischer Sensor oder ein Seilzugsensor. Werden beide Positionswerte während der Messfahrt synchron erfasst, so kann durch einfache Addition der beiden Werte die absolute Kantenposition des Messobjekts bestimmt werden.

Die Differenz der Messwerte des Sensors 4, d.h. der gemessenen Positionen der beiden Kanten 5, 6 des Messobjektes 1, entspricht der Breite des Messobjektes 1, wobei dieses während der Breitenmessung nicht bewegt werden darf.

Des Weiteren ist in Figur 1 eine Korrektureinheit 10 dargestellt, bei der es sich beispielsweise um einen Computer mit entsprechender Software handeln kann. Die Korrektureinheit 10 dient dazu, durch eine Neigung der Linearachse 7 um einen Neigungswinkel $\beta$ hervorgerufene Messfehler zu korrigieren. Um den Neigungswinkel $\beta$ zu erfassen, weist das Messsystem 2 einen Neigungssensor 11 auf. Zur Vereinfachung der Darstellung sind die Korrektureinheit 10 und der Neigungssensor 11 in den weiteren Figuren nicht dargestellt, können jedoch gleichwohl bei diesen vorgesehen sein.

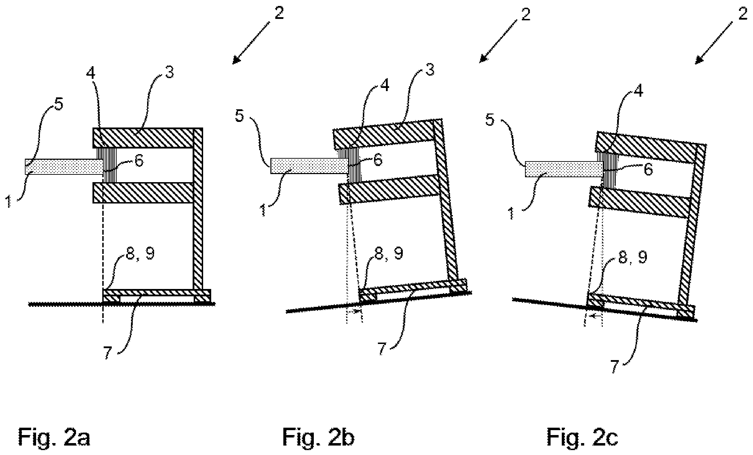

In den Figuren 2a bis 2c ist der horizontale Messfehler verdeutlicht, wobei drei Situationen auf der Linearachse 7 dargestellt sind:

- Ideale Ausrichtung (Figur 2a): die tatsächliche Position der Kante 6 des Messobjekts 1 und die detektierte Position der Kante 6 des Messobjekts 1 auf der Linearachse 7 stimmen überein.
- Neigung nach vorne (Fig. 2b): die detektierte Position der Kante 6 des Messobjekts 1 ist nacheilend zur tatsächlichen Position der Kante 6 des Messobjekts 1.
- Neigung nach hinten (Fig. 2c): die detektierte Position der Kante 6 des Messobjekts 1 ist voreilend zur tatsächlichen Position der Kante 6 des Messobjekts 1.

Sind der Neigungswinkels $\beta$ und die geometrische Position des Messobjekts 1 bekannt, kann die Positionsabweichung in erfindungsgemäßer Weise bestimmt werden.

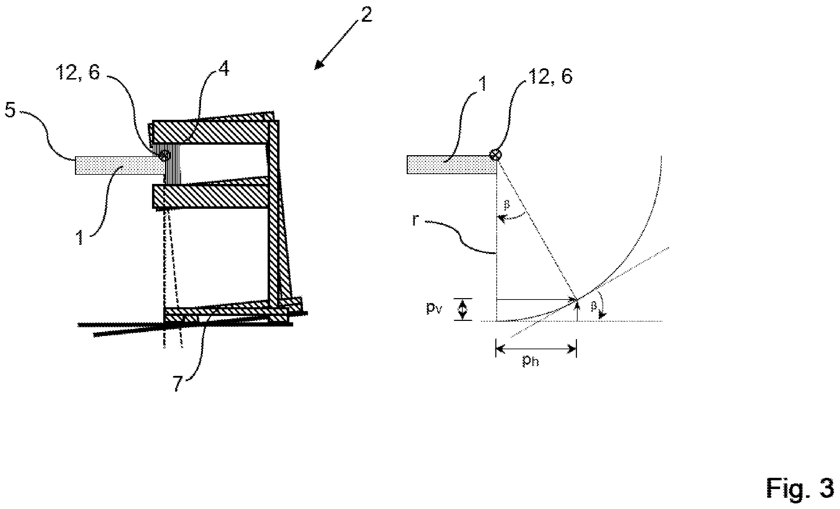

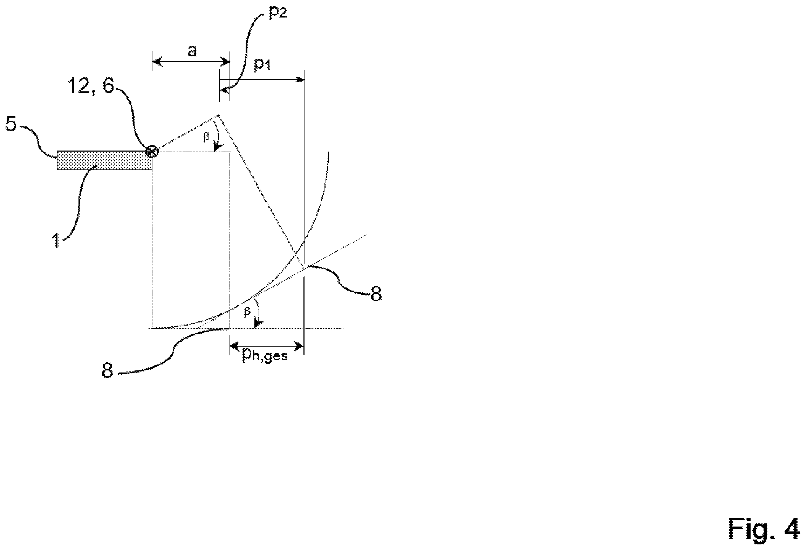

Figur 3 zeigt den prinzipiellen Fehler vereinfacht dargestellt. Als Drehpunkt 12 für die Neigung ist die Kante 6 des Messobjekts 1 gewählt worden. Der zu erwartende horizontale Messfehler $p_h$ ist auf der Richtung der Linearachse 7 aufgetragen. Die Darstellung ist dahingehend vereinfacht, dass der erfasste Messwert der Kante 6 des Sensors 4 und die Erfassung des Referenzpunktes 8 (z.B. Sensor des Magnetbandes am Schlitten der Linearachse 7) geometrisch übereinanderliegen. Ist dies nicht der Fall, so ergibt sich eine leicht unterschiedliche Rechnung, die in der Figur 4 dargestellt ist. In Figur 4 sind nur die horizontalen Positionsänderungen dargestellt.

Gemäß Figur 3 kann die durch den Neigungswinkel $\beta$ der Linearachse 7 hervorgerufene korrespondierende Neigung des Messsystems 2 in zwei Bewegungen aufgespalten werden:

- Die Drehbewegung verursacht eine vertikale Höhenänderung (Differenz Messobjekt 1 - Linearachse 7), diese kann für eine Breitenmessung unberücksichtigt bleiben. Sie kommt bei der Ebenheitsmessung zum Tragen, da dann der Messabstand aufgrund der Neigung verfälscht wird.
- Die Drehbewegung verursacht eine horizontale Abstandsänderung zwischen dem von dem Sensor 4 detektierten Messwert der Kante 6 und dem Referenzpunkt 8 der Linearachse 7.

Sind der Neigungswinkel $\beta$ und die Höhendifferenz r zwischen Linearachse 7 und Messobjekt 1 bekannt, so können die Positionsänderungen in horizontaler Richtung, d.h. der horizontale Messfehler $p_h$, und die Positionsänderung in vertikaler Richtung, d.h. der vertikale Messfehler $p_v$, wie folgt berechnet werden:

$$p_h = r \cdot \sin(\beta)$$

$$p_v = r - r \cdot \cos(\beta)$$

Wird bei der Neigung zusätzlich die Distanz zwischen der Kante 6 des Messobjektes 1 und dem Referenzpunkt 8 am Messsystem 2 berücksichtigt, so zeigt Figur 4 schematisch den Sachverhalt.

Der horizontale Messfehler $p_{h,ges}$ kann durch zwei Bewegungen ermittelt werden. Wie in Figur 3 dargestellt, verursacht die Höhendifferenz r den Großteil der Positionsänderung $p_1$. Der Abstand a zwischen der Kante 6 des Messobjektes 1 und dem Referenzpunkt 8 verursacht einen zweite horizontale Positionsänderung $p_2$. Die Differenz beider Positionsänderungen ergibt den gesamten horizontalen Messfehler $p_{ges}$:

$$p_1 = r \cdot \sin(\beta)$$

$$p_2 = a - a \cdot \cos(\beta)$$

$$p_{h,ges} = p_1 - p_2$$

Aus der Formel für $p_2$ ist ersichtlich, dass dieser Abstandwert für kleine Neigungswinkel $\beta$ vernachlässigt werden kann.

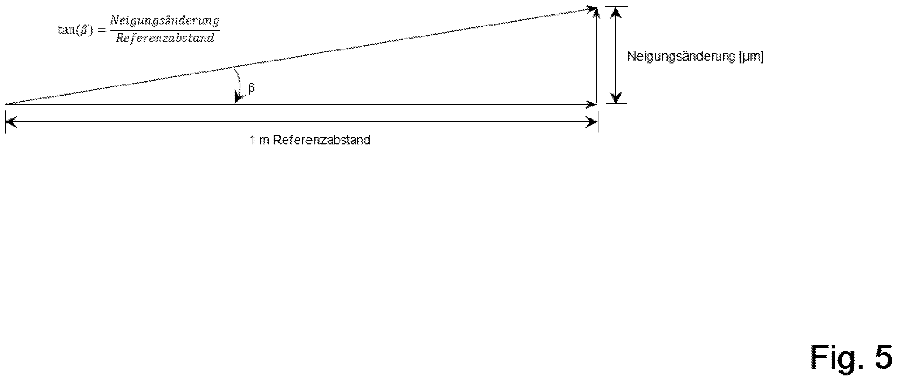

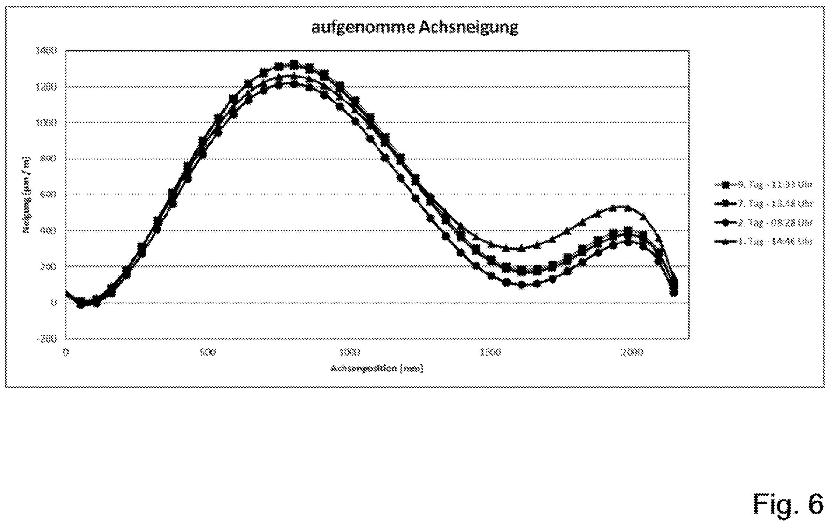

Figur 6 zeigt die gemessene Neigungsänderung einer Linearachse 7 von 2,2 m Länge. Die Neigung der Linearachse 7 ist an mehreren Tagen gemessen worden. Gewöhnlich werden Neigungswerte in Grad [°] angegeben. Da die zu erwartenden Werte einer Neigungsänderung auf einer Linearachse 7 relativ klein sind und um eine bessere Vorstellung über den zu erwartenden Fehler zu bekommen, ist als Einheit [μm/m] gewählt worden, d.h. es wird die Neigungsänderung in [μm] pro Meter Referenzanstand gewählt gegeneinander aufgetragen. Sollte der Höhenunterschied zwischen der Kante 5, 6 des Messobjekts1 und der Linearachse 1 m betragen, so wird der erwartete Neigungsfehler in [μm] dargestellt. Figur 5 verdeutlicht den Zusammenhang. Eine Neigung von 600 μm/m entspricht einem Winkel von ca. 0,057°.

Je nachdem wo die Kanten 5, 6 liegen, beeinflusst der Neigungswinkel $\beta$ der Linearachse 7 das Ergebnis einer Breitenmessung mehr oder weniger. Durch das erfindungsgemäße Verfahren und die erfindungsgemäße Vorrichtung können die Messwerte der Positionen der Kanten 5, 6 korrigiert und damit die zu erwartende Messunsicherheit minimiert werden.

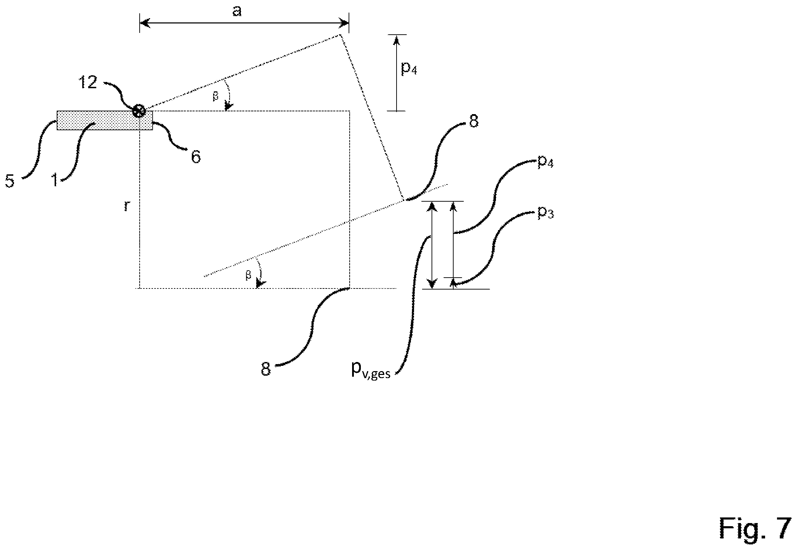

In Figur 3 ist bereits der vertikale Messfehler $p_v$, verursacht durch den Neigungswinkel $\beta$ einer Linearachse, dargestellt. Den größten Teil der Messunsicherheit wird durch den horizontalen Abstand a zwischen Messposition auf dem Messobjekt 1 und Referenzpunkt 8 auf der Linearachse verursacht. Der Zusammenhang ist in Figur 7 dargestellt. Als virtueller Drehpunkt 12 ist wieder die Kante 6 am Messobjekt 1 als Messposition gewählt worden.

In Figur 3 ist der vertikale Messfehler $p_v$ dargestellt, dieser kann wie folgt ermittelt werden:

$$p_v = r - r \cdot \cos(\beta) = p_3$$

Zusätzlich verursacht der horizontale Abstand a zwischen der Kante 6 des Messobjektes 1 und dem Referenzpunkt 8 eine weitere vertikale Positionsänderung $p_4$. Diese kann durch folgende Formel berechnet werden:

$$p_4 = a \cdot \sin(\beta)$$

Die gesamte vertikale Positionsänderung $p_{v,ges}$, verursacht durch die Achsneigung, kann durch Addition der beiden Werte $p_3$ und $p_4$ ermittelt werden:

$$p_{v,ges} = p_3 + p_4$$

Bei bekanntem Neigungswinkel $\beta$ der Linearachse 7 und bekannten geometrischen Maße des Messsystems zur Messposition kann somit der resultierende vertikale Messfehler $p_{v,ges}$ errechnet und korrigiert werden.

Hinsichtlich weiterer vorteilhafter Ausgestaltungen der erfindungsgemäßen Vorrichtung und des erfindungsgemäßen Verfahrens wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung und des erfindungsgemäßen Verfahrens lediglich zur Erörterung der beanspruchten Lehre dienen, diese jedoch nicht auf die Ausführungsbeispiele einschränken.

**Bezugszeichenliste**

| | |
|---|---|
| 1 | Messobjekt |
| 2 | Messsystem |
| 3 | Rahmen |
| 4 | Sensor |
| 5 | Kante (Messobjekt) |
| 6 | Kante (Messobjekt) |
| 7 | Linearachse |
| 8 | Referenzpunkt |
| 9 | Mittel zur Positionserfassung |
| 10 | Korrektureinheit |
| 11 | Neigungssensor |
| 12 | Drehpunkt |
| $\beta$ | Neigungswinkel |
| r | Abstand (Linearachse - Messobjekt) |
| a | Abstand (Messpunkt - Referenzpunkt) |

**Patentansprüche**

1. Verfahren zur Vermessung eines Messobjektes (1), nämlich zur Breitenmessung und/oder zur Ebenheitsmessung eines Messobjektes (1), mit einem entlang einer Linearachse (7) beweglichen Messsystem (2), wobei das Messsystem (2) mindestens einen Sensor (4) aufweist und wobei Mittel (9) zur Erfassung einer Position eines Referenzpunktes (8) des Messsystems (2) angeordnet sind, wobei mit dem Sensor (4) mindestens ein Messwert des Messobjektes (1) erfasst wird und wobei ein durch eine Neigung der Linearachse (7) um einen Neigungswinkel $\beta$ hervorgerufener Messfehler des Messwerts ermittelt wird und wobei der Messwert um den Messfehler korrigiert wird,
**dadurch gekennzeichnet, dass** über einen Neigungssensor (11) des Messsystems (2) der lokale Neigungswinkel $\beta$ der Linearachse (7) ermittelt wird.

2. Verfahren nach Anspruch 1, **dadurch gekennzeichnet, dass** ein horizontaler Messwert des Messobjektes (1) erfasst wird, der eine Position in Erstreckungsrichtung der Linearachse (7) angibt und/oder dass ein vertikaler Messwert des Messobjektes (1) erfasst wird, der eine Position in Richtung senkrecht zur Erstreckungsrichtung der Linearachse (7) angibt.

3. Verfahren nach Anspruch 2, **dadurch gekennzeichnet, dass** ein horizontaler Messfehler $p_h$ des horizontalen Messwerts ermittelt wird anhand der Formel

$$p_h = r \cdot \sin(\beta)$$

wobei r der vertikale Abstand zwischen der Linearachse (7) und dem Messobjekt (1) ist.

4. Verfahren nach Anspruch 2 oder 3, **dadurch gekennzeichnet, dass** ein horizontaler Messfehler $p_{h,ges}$ des horizontalen Messwerts ermittelt wird anhand der Formeln:

$$p_1 = r \cdot \sin(\beta)$$

$$p_2 = a - a \cdot \cos(\beta)$$

$$p_{h,ges} = p_1 - p_2$$

wobei r der vertikale Abstand zwischen der Linearachse (7) und dem Messobjekt (1) ist und wobei a der horizontale Abstand zwischen einer Kante (5, 6) des Messobjektes (1) und dem Referenzpunkt (8) ist.

5. Verfahren nach einem der Ansprüche 2 bis 4, **dadurch gekennzeichnet, dass** ein vertikaler Messfehler $p_v$ des vertikalen Messwerts ermittelt wird anhand der Formel

$$p_v = r - r \cdot \cos(\beta)$$

wobei r der vertikale Abstand zwischen der Linearachse (7) und dem Messobjekt (1) ist.

6. Verfahren nach einem der Ansprüche 2 bis 5, **dadurch gekennzeichnet, dass** ein vertikaler Messfehler $p_{v,ges}$ des vertikalen Messwerts ermittelt wird anhand der Formel

$$p_3 = r - r \cdot \cos(\beta)$$

$$p_4 = a \cdot \sin(\beta)$$

$$p_{v,ges} = p_3 + p_4$$

wobei r der vertikale Abstand zwischen der Linearachse (7) und dem Messobjekt (1) ist und wobei a der horizontale Abstand zwischen einer Kante (5, 6) des Messobjektes (1) und dem Referenzpunkt (8) ist.

7. Verfahren nach einem der Ansprüche 1 bis 6, **dadurch gekennzeichnet, dass** an definierten Messpunkten der Neigungswinkel $\beta$ der Linearachse (7) ermittelt wird.

8. Vorrichtung zur Vermessung eines Messobjektes (1), nämlich zur Breitenmessung und/oder zur Ebenheitsmessung eines Messobjektes (1), unter Nutzung eines Verfahrens nach einem der Ansprüche 1 bis 7, mit einem entlang einer Linearachse (7) der Vorrichtung beweglichen Messsystem (2), wobei das Messsystem (2) mindestens einen Sensor (4) und einen Neigungssensor (11) zur Bestimmung des lokalen Neigungswinkels $\beta$ der Linearachse (7) aufweist, wobei die Vorrichtung Mittel (9) zur Erfassung einer Position eines Referenzpunktes (8) des Messsystems (2) und eine Korrektureinheit (10) aufweist, wobei mit dem Sensor (4) mindestens ein Messwert des Messobjektes (1) messbar ist, wobei ein durch eine Neigung der Linearachse (7) um einen Neigungswinkel $\beta$ hervorgerufener Messfehler des Messwerts von der Korrektureinheit (10) ermittelbar ist, wobei der Messwert von der Korrektureinheit (10) um den Messfehler korrigierbar ist.

## Claims

1. Method for measuring a measurement object (1), that is to say, for width measurement and/or flatness measurement of a measurement object (1), having a measurement system (2) which can be moved along a linear axis (7), wherein the measurement system (2) has at least one sensor (4) and wherein means (9) for detecting a position of a reference point (8) of the measurement system (2) are arranged, wherein with the sensor (4) at least one measurement value of the measurement object (1) is detected and wherein a measurement error, which is caused by an inclination of the linear axis (7) about an inclination angle $\beta$, of the measurement value is established and wherein the measurement value is corrected by the measurement error, **characterised in that** via an inclination sensor (11) of the measurement system (2) the local inclination angle $\beta$ of the linear axis (7) is established.

2. Method according to claim 1, **characterised in that** a horizontal measurement value of the measurement object (1) which indicates a position in the extent direction of the linear axis (7) is detected and/or **in that** a vertical measurement value of the measurement object (1) which indicates a position in the direction perpendicular to the extent direction of the linear axis (7) is detected.

3. Method according to claim 2, **characterised in that** a horizontal measurement error $p_h$ of the horizontal measurement value is established with reference to the formula

$$p_h = r \cdot \sin(\text{ß})$$

wherein r is the vertical spacing between the linear axis (7) and the measurement object (1).

4. Method according to claim 2 or 3, **characterised in that** a horizontal measurement error $p_{h.ges}$ of the horizontal measurement value is established with reference to the formulae:

$$p_1 = r \cdot \sin(\text{ß})$$

$$p_2 = a - a \cdot \cos(\text{ß})$$

$$p_{h.ges} = p_1 - p_2$$

wherein r is the vertical spacing between the linear axis (7) and the measurement object (1) and wherein a is the horizontal spacing between an edge (5, 6) of the measurement object (1) and the reference point (8).

5. Method according to any one of claims 2 to 4, **characterised in that** a vertical measurement error $p_v$ of the vertical measurement value is established with reference to the formula

$$p_v = r - r \cdot \cos(\text{ß})$$

wherein r is the vertical spacing between the linear axis (7) and the measurement object (1).

6. Method according to any one of claims 2 to 5, **characterised in that** a vertical measurement error $p_{v.ges}$ of the vertical measurement value is established with reference to the formula

$$p_3 = r - r \cdot \cos(\text{ß})$$

$$p_4 = a \cdot \sin(\text{ß})$$

$$p_{v.ges} = p_3 + p_4$$

wherein r is the vertical spacing between the linear axis (7) and the measurement object (1) and wherein a is the horizontal spacing between an edge (5, 6) of the measurement object (1) and the reference point (8).

7. Method according to any one of claims 1 to 6, **characterised in that** at defined measurement locations the inclination angle ß of the linear axis (7) is established.

8. Apparatus for measuring a measurement object (1), that is to say, for width measurement and/or flatness measurement of a measurement object (1), using a method according to any one of claims 1 to 7, having a measurement system (2) which can be moved along a linear axis (7) of the apparatus, wherein the measurement system (2) has at least one sensor (4) and an inclination sensor (11) for determining the local inclination angle ß of the linear axis (7), wherein the apparatus has means (9) for detecting a position of a reference point (8) of the measurement system (2) and a correction unit (10), wherein with the sensor (4) at least one measurement value of the measurement object (1) can be measured, wherein a measurement error, which is caused by an inclination of the linear axis (7) about an inclination angle ß, of the measurement value can be established by the correction unit (10), wherein the measurement value can be corrected by the correction unit (10) by the measurement error.

**Revendications**

1. Procédé de mesure d'un objet de mesure (1), à savoir pour la mesure de largeur et/ou pour la mesure de planéité d'un objet de mesure (1), avec un système de mesure (2) mobile le long d'un axe linéaire (7), dans lequel le système de mesure (2) comporte au moins un capteur (4) et dans lequel des moyens (9) pour la détection d'une position d'un point de référence (8) du système de mesure (2) sont disposés, dans lequel au moins une valeur de mesure de l'objet de mesure (1) est détectée avec le capteur (4) et dans lequel une erreur de mesure de la valeur de mesure provoquée par une inclinaison de l'axe linéaire (7) d'un angle d'inclinaison ß est déterminée et dans lequel la valeur de mesure est corrigée de l'erreur de mesure,
**caractérisé en ce que**
l'angle d'inclinaison local ß de l'axe linéaire (7) est déterminé via un capteur d'inclinaison (11) du système de mesure (2).

2. Procédé selon la revendication 1, **caractérisé en ce qu'**une valeur de mesure horizontale de l'objet de mesure (1) est détectée, qui indique une position dans la direction d'extension de l'axe linéaire (7) et/ou **en ce qu'**une valeur de mesure verticale de l'objet de mesure (1) est détectée, qui indique une position dans la direction perpendiculaire à la direction d'extension de l'axe linéaire (7).

3. Procédé selon la revendication 2, **caractérisé en ce qu'**une erreur de mesure horizontale $p_h$ de la valeur de mesure horizontale est déterminée à l'aide de la formule

$$p_h = r \cdot \sin(\text{ß})$$

où r est la distance verticale entre l'axe linéaire (7) et l'objet de mesure (1).

4. Procédé selon la revendication 2 ou 3, **caractérisé en ce qu'**une erreur de mesure horizontale $p_{h,ges}$ de la valeur de mesure horizontale est déterminée à l'aide des formules :

$$p_1 = r \cdot \sin(\text{ß})$$

$$p_2 = a - a \cdot \cos(\text{ß})$$

$$P_{h,ges} = p_1 - p_2$$

où r est la distance verticale entre l'axe linéaire (7) et l'objet de mesure (1) et où a est la distance horizontale entre un bord (5, 6) de l'objet de mesure (1) et le point de référence (8).

5. Procédé selon l'une des revendications 2 à 4, **caractérisé en ce qu'**une erreur de mesure verticale pv de la valeur de mesure verticale est déterminée à l'aide de la formule

$$p_v = r - r \cdot \cos(\text{ß})$$

où r est la distance verticale entre l'axe linéaire (7) et l'objet de mesure (1).

6. Procédé selon l'une des revendications 2 à 5, **caractérisé en ce qu'**une erreur de mesure verticale $p_{v,ges}$ de la valeur de mesure verticale est déterminée à l'aide des formules

$$p_3 = r - r \cdot \cos(\text{ß})$$

$$p_4 = a \cdot \sin(\text{ß})$$

$$p_{v,ges} = p_3 + p_4$$

où r est la distance verticale entre l'axe linéaire (7) et l'objet de mesure (1) et où a est la distance horizontale entre un bord (5, 6) de l'objet de mesure (1) et le point de référence (8).

7. Procédé selon l'une des revendications 1 à 6, **caractérisé en ce que** l'angle d'inclinaison ß de l'axe linéaire (7) est déterminé à des points de mesure définis.

8. Dispositif pour la mesure d'un objet de mesure (1), à savoir pour la mesure de largeur et/ou pour la mesure de planéité d'un objet de mesure (1), à l'aide d'un procédé selon l'une des revendications 1 à 7, avec un système de mesure (2) mobile le long d'un axe linéaire (7) du dispositif, dans lequel le système de mesure (2) comprend au moins un capteur (4) et un capteur d'inclinaison (11) pour la détermination de l'angle d'inclinaison local ß de l'axe linéaire (7), dans lequel le dispositif comprend des moyens (9) pour la détection d'une position d'un point de référence (8) du système de mesure (2) et une unité de correction (10), dans lequel au moins une valeur de mesure de l'objet de mesure (1) peut être mesurée avec le capteur (4), dans lequel une erreur de mesure de la valeur de mesure provoquée par une inclinaison de l'axe linéaire (7) d'un angle d'inclinaison ß peut être déterminée par l'unité de correction (10), la valeur de mesure pouvant être corrigée de l'erreur de mesure par l'unité de correction (10).

EP 4 158 277 B1

Fig. 1

Fig. 2a          Fig. 2b          Fig. 2c

Fig. 3

Fig. 4

$$\tan(\beta) = \frac{Neigungsänderung}{Referenzabstand}$$

β

Neigungsänderung [µm]

1 m Referenzabstand

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0342267 A1